# EUROPEAN PATENT APPLICATION

(11) **EP 2 639 000 A1**
(43) Date of publication of application: **18.09.2013**
(21) Application number: 11839642.3
(22) Date of filing: 08.11.2011
(51) Int. Cl.: B23D 77/00

(54) **REAMER AND METHOD FOR WORKING HOLE**

(30) Priority: 10.11.2010 JP 2010252316
(71) Applicant: Mitsubishi Heavy Industries, Ltd., Tokyo 108-8215 (JP)
(72) Inventor: HIRAKI Junya, Tokyo 108-8215 (JP)
(74) Representative: Henkel, Breuer & Partner
(86) International application number: PCT/JP2011/075679
(87) International publication number: WO 2012/063802

(57) **Abstract**

A reamer is provided with a solid cylindrical section having a solid cylindrical shape and rotating in a preset direction about the axis thereof; blades provided on the outer peripheral surface of the solid cylindrical section and twisted and extended in the direction in which the blades are formed for up-cutting; a cutting fluid flow path which is provided in the solid cylindrical section and into which a cutting fluid is introduced; and a discharge opening group formed in the outer peripheral surface of the solid cylindrical section and connected to the cutting fluid flow path. The cutting fluid flow path extends in such a manner that the cutting fluid is discharged to the rear end side from the discharge opening group.

## Description

### Technical Field

The present invention relates to a reamer and a hole processing method.

### Background Art

There is a case that a reamer is used to finish the shape of a hole formed in a work material.

In relation to the above, Patent Literature 1 (Japanese Patent No. 2,724,120) discloses a reamer for processing a composite material. The Patent Literature 1 discloses forming channels which are twisted in a direction opposite to a predetermined rotational direction, as being brought closer to a tip portion; forming to a blade section, a scratching section in which an external diameter increases more from the tip portion of the blade section toward a shank section, and a back-tapered section whose outer diameter is decreased at the rate of 0.05 to 0.25 mm/100 mm from the scratching section toward the shank section; forming a margin section having the width of 0.05 and 0.20 mm in adjacent to a direction opposite to the outer blade of the scratching section; and providing a clearance surface between 20 and 30°, following the margin section. It is described in the Patent Literature 1 that by employing such a structure, a cutting resistance of a reamer for processing the composite material can be preferably reduced, that a finished surface is not made rough, and that chips generated from the scratching section are discharged in a front direction, namely, the tip direction of the reamer.

### Citation List

[Patent literature 1] Japanese patent No. 2,724,120

### Summary of the Invention

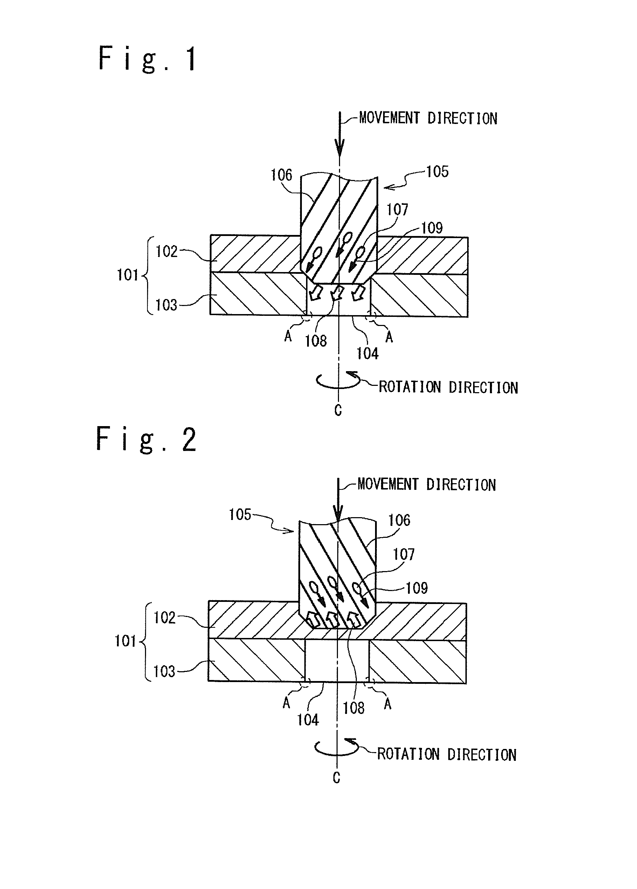

By the way, a reamer is sometimes used which discharges a cut liquid. FIG. 1 is a diagram schematically showing an example of such a reamer. The reamer 105 shown in FIG. 1 is used to finish the shape of a hole 104 formed in the work material 101. The work material 101 has a composite material board 102 and a metal plate 103 which are laminated. A blade 106 and outlets 107 are provided for the reamer 105. The blade 106 is twisted into a direction opposite to a rotation direction of the reamer. Also, although being not shown, a cut liquid flow passage is provided inside the reamer 105 to introduce a cutting liquid. The outlet 107 is connected with the cut liquid flow passage. The reamer 105 is rotated along the rotation direction around the central axis c. The rotating reamer 105 is sent along a movement direction and is inserted in the hole 104 of the work material 101 from the side of the composite material board 102. Also, the cutting liquid is introduced into the cut liquid flow passage. The introduced cutting liquid 109 is discharged into the movement direction of the reamer 105 through the outlet 107.

When the blade section 106 is twisted in the opposite direction, as shown in Patent Literature 1 and FIG. 1, the inner wall of the hole 104 in the work material 101 is cut such that chips 108 are generated in the movement direction of the blade section 106. That is, the hole 104 of the work material 101 is cut through down-cutting. At this time, a force is applied to the inner wall of the hole 104 by the blade section 106 into the movement direction of the reamer 105. Here, as shown in FIG. 1, there is a case that the metal plate 103 is contained in the work material 101. In a surface part (part A in FIG. 1) of the metal plate 103 on the side of the movement direction, the metal plate 103 is pushed on the side of the movement direction, and deformed to generate burrs. That is, when the blade section 106 is twisted to the direction opposite to the rotation direction while extending, the burrs are generated in the metal plate 103.

For the purpose of suppressing the generation of burrs, it could be considered to change the direction in which the blade section 106 extends. FIG. 2 is a diagram schematically showing another example of the reamer 105. In the reamer 105 shown in FIG. 2, the blade section 106 extends for the tip portion while being twisted into the rotation direction (hereinafter, to be referred to a forward direction). The other points are the same as those in the example shown in FIG. 1. As shown in FIG. 2, when the reamer 105 having the blade section 106 twisted in the forward direction is used, the inner wall of the hole 104 in the work material 101 is cut such that chips 108 are generated in the direction opposite to the movement direction (direction of the back portion of the reamer). That is, the hole 104 of the work material is cut through the upper-cutting. When the hole 104 of the work material 101 is cut through the upper-cutting, the surface part of the metal plate 103 is prevented from being pushed to the movement direction and the burrs are prevented from being generated.

However, in an example shown in FIG. 2, chips 108 are discharged for the direction opposite to the movement direction whereas the cut liquid 109 is discharged into the movement direction. Therefore, the discharge of the chips 108 is hindered by the cut liquid 107 and the chips 108 clogs in the reamer 105. As a result, there is a case that the inner wall of the hole 104 in the work material 101 is cut with the chips 108 so that the hole diameter cannot be attained.

Therefore, the present invention may provide a reamer and a hole processing method in which the generation of burrs can be suppressed and the hole having a desired hole diameter can be attained.

The reamer according to the present invention includes a column section rotating around a central line in a predetermined rotation direction; a blade section provided on an outer surface of the column section and extending while being twisted in a direction to upper-cut; a cut liquid flow passage provided in said column section to introduce a cut liquid into the cut liquid flow passage; and an outlet group formed on the outer surface of the column section and connected with said cut liquid flow passage. The cut liquid flow passage extends such that the cut liquid is discharged from the outlet group toward a back portion of the reamer.

According to this invention, even if the work material includes a metal plate, the generation of burrs can be restrained, because the blade section is formed such that upper-cutting is performed.

In addition, the cut liquid is discharged from the outlet group for the back portion of the reamer. That is, chips and the cut liquid are discharged to the same direction (the direction for the back portion). Therefore, the discharge of the chips is never hindered by the cut liquid, and the reamer is never clogged with the chips. The hole of the work material is prevented from being unnecessarily cut with the chips so that the desired hole diameter can be attained.

The hole processing method according to the present invention includes rotating a reamer; and processing a hole formed previously in a work material, by using the rotating reamer. The reamer includes a column section; and a blade section provided on an outer surface of the column section and extending while being twisted. The rotating a reamer includes rotating the reamer in a direction in which upper-cutting is performed. The processing includes introducing a cut liquid inside the column section; and discharging the introduced cut liquid from the outer surface of the column section for the back portion.

According to the present invention, the reamer and the hole processing method are provided in which the generation of burrs can be suppressed and the good finishing shape can be obtained.

### Brief Description of the Drawings

FIG. 1 is a diagram schematically showing a conventional example of a reamer;
FIG. 2 is a diagram schematically showing another conventional example of the reamer;
FIG. 3 is a sectional view schematically showing a work material;
FIG. 4 is a side view showing a reamer according to an embodiment;
FIG. 5 is a sectional view showing the reamer along the line A-A' section in FIG. 4;
FIG. 6 is a diagram showing a structure of a cutting fluid flow passage and an outlet group;
FIG. 7 is a diagram showing a hole processing method according to the embodiment;
FIG. 8 is a diagram showing a definition of a twist angle; and
FIG. 9 is a table showing an experiment result.

### Description of Embodiments

Hereinafter, embodiments of the present invention will be described in detail with reference to the attached drawings.

A reamer according to an embodiment of the present invention is used to finish the shape of a hole formed in a work material. A case that a main wing member of an aircraft is employed as the work material will be described in the present embodiment.

The work material will be described before the reamer will be described.

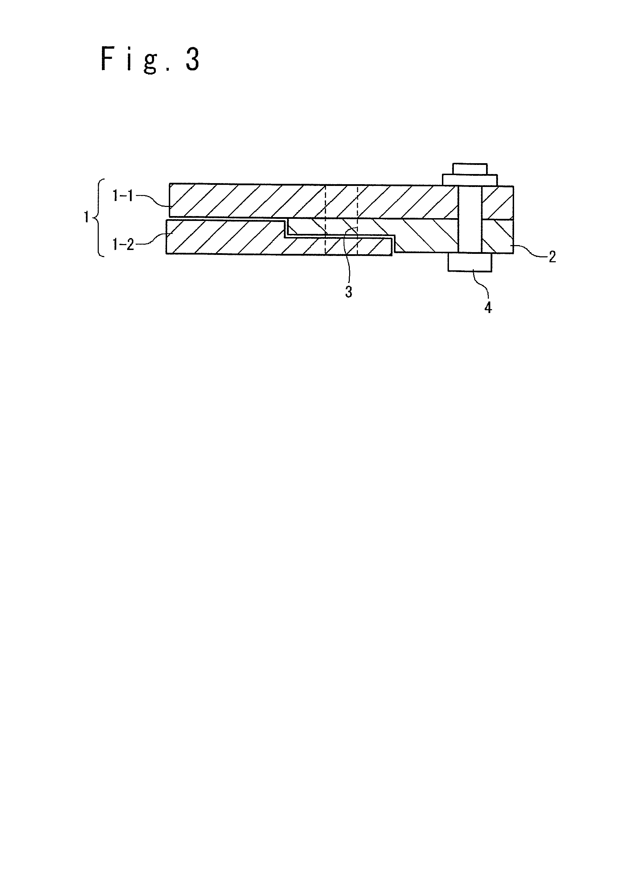

FIG. 3 is a sectional view schematically showing the work material. As shown in FIG. 3, the work material contains a first composite material plate 1-1, a second composite material plate 1-2, and a metal plate 2. These plates are laminated such that the metal plate 2 is put between the first composite material plate 1-1 and a second composite material lamination. The first composite material plate 1-1 and the second composite material plate 1-2 are, for example, CFRP (Carbon Fiber Reinforced Plastic) plates. Also, the metal plate 2 is, for example, a titanium (Ti) plate.

As shown in FIG. 3, the first composite material plate 1-1, the second composite material plate 1-2 and the metal plate 2 are permanently fastened by a fastening material 4. That is, it is impossible to disassemble the work material. Also, a hole 3 is formed and provided to pass through the first composite material plate 1-1, the second composite material plate 1-2 and the metal plate 2. The reamer according to the present embodiment is used to finish the shape of the hole 3. In this case, when burrs are generated in the metal plate 2 at a time of processing, the generated burrs cannot be removed because the work material cannot be disassembled. Therefore, when the work material is processed, it is strongly required to finish the shape of the hole 3 not so as to generate any burr.

The structure of the reamer according to the present embodiment will be described below.

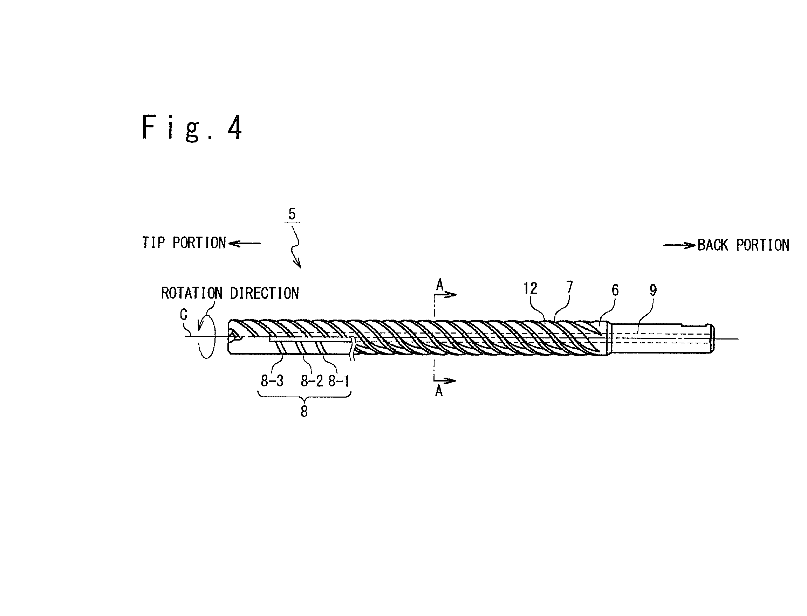

FIG. 4 is a side view showing a reamer 5 according to the present embodiment. In FIG. 4, the inner shape of the reamer 5 is partially drawn, for the convenience of description.

As shown in FIG. 4, the reamer 5 has a column section 6, a plurality of blade sections 7, a cutting fluid flow passage 9 and an outlet group 8.

The column section 6 configures a main body section of the reamer 5 and is columnar. In the column section 6, a back portion of the reamer is coupled to a rotating mechanism (not shown). The rotating mechanism allows the column section 6 to be rotated around a central axis c in a rotational direction shown in FIG. 4.

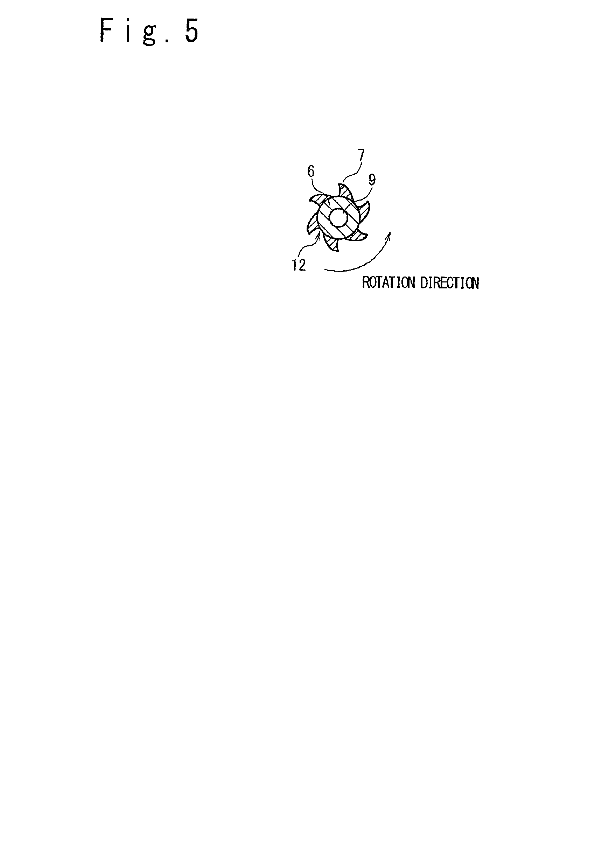

The plurality of blade sections 7 are formed on the side of the column section 6. The respective blade sections 7 are twisted to be oriented in the same direction as the rotational direction, as the respective blade sections 7 come closer to a tip portion of the reamer. That is, the respective blade sections 7 are twisted to in a forward direction. FIG. 5 is a sectional view showing the reamer along the line A-A' section of FIG. 4. As shown in FIG. 5, each blade section 7 is formed such that the tip portion is oriented in the rotational direction. Also, on the side of the column section 6, a channel 12 is formed between adjacent two of the plurality of blade sections 7.

The cutting fluid flow passage 9 is a portion into which a cutting fluid is introduced, and formed inside the column section 6. On the other hand, outlets of the group 8 are formed to discharge the introduced cutting fluid and provided for the channels 12.

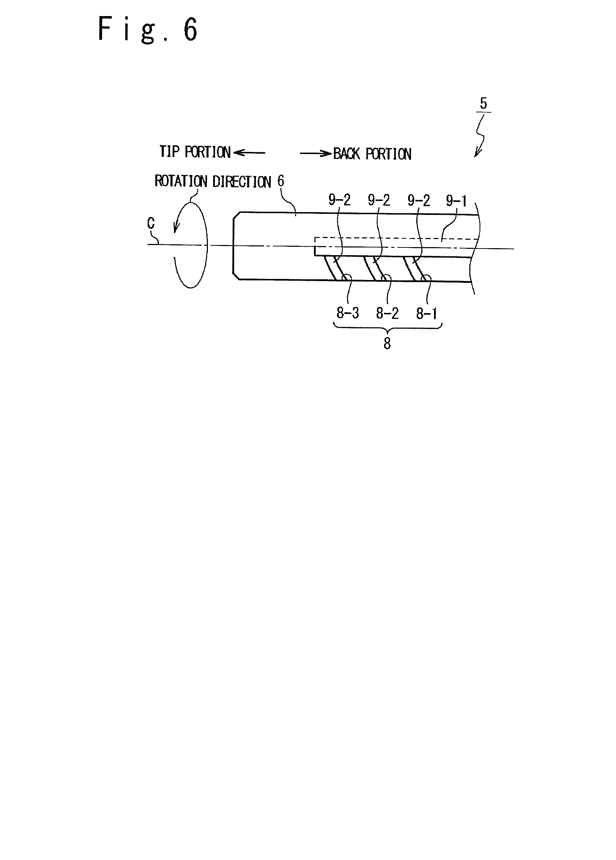

FIG. 6 is a diagram showing the structure of the cutting fluid flow passage 9 and the outlet group 8. As shown in FIG. 6, the cutting fluid flow passage 9 has a trunk section 9-1 and a plurality of branch sections 9-2. The trunk section 9-1 extends along the central axis c. Each of the plurality of branch sections 9-2 is connected to the trunk section 9-1 at one end, and is connected to each of outlets (8-1 to 8-3) at the other end. Here, the branch section 9-2 extends from the trunk section 9-1 toward the back portion of the reamer. Since such a structure is employed, the cutting fluid introduced to the trunk section 9-1 is discharged from the respective outlets (8-1 to 8-3) through the branch sections 9-2 toward the back portion.

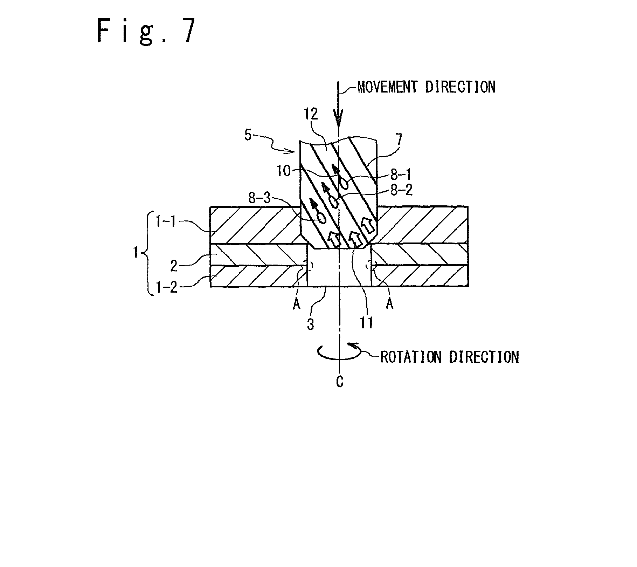

Subsequently, a method of processing a hole according to the present embodiment will be described. FIG. 7 is a diagram showing the hole processing method according to the present embodiment.

As shown in FIG. 7, the reamer 5 is rotated in the rotational direction. Moreover, the cutting fluid 10 is introduced into the cutting fluid flow passage 9. Consequently, the cutting fluid 10 is discharged from the respective outlets (8-1 to 8-3) toward the back portion of the reamer. Moreover, the rotating reamer 5 is moved into a movement direction and inserted into the hole 3. Consequently, the inner wall of the hole 3 is cut by the blade sections 7, and the shape of the hole 3 is adjusted and finished.

In this case, in the present embodiment, the blade section 7 is twisted in the forward direction. Thus, the inner wall of the hole 3 is cut so that upper cutting is performed, and chips 11 are generated on the back portion side of the blade section 7. The generated chips 11 are guided along the channels 12 toward the back portion of the reamer 5 and discharged. In this way, since the hole 3 is worked so that the upper cutting is performed, the metal plate 2 is prevented from being pushed to the movement direction in a surface portion (portion A in FIG. 7) of the metal plate 2. For this reason, the burrs are prevented from being generated on the metal plate 2.

In addition, in the present embodiment, the cutting fluid 10 is discharged toward the back portion of the reamer. A discharge direction of the cutting fluid 10 is the same as the discharge direction of the chips 11. Thus, the cutting fluid 10 does not prevent the discharge of the chips 11. The channel 12 is prevented from being clogged with the chips 11, and the shape of the hole 3 can be finished to have a desirable hole diameter.

It should be noted that the present embodiment has been described by using a case where the metal plate 2 is permanently put between the first composite material plate 1-1 and the second composite material plate 1-2 in the work material. In this case, the work material cannot be disassembled as mentioned above. Thus, when the burrs are generated in the metal plate 2, the burrs cannot be removed. Therefore, the suppression of the burrs is strongly requested. The reamer 5 according to the present embodiment can be preferably applied to the work material in that the generation of the burrs can be prevented. However, the work material to which the reamer 5 according to the present embodiment is applied is not limited to this type of work material. In case that the metal plate is included in the work material, there is a possibility that the burrs are generated at the time of processing. When the burrs are generated in the metal plate, a work for removing the burrs is required. Therefore, when a work material including a metal plate is used as the work material, the use of the reamer 5 according to the present embodiment suppresses the generation of the burrs, and the work for removing the burr can be eliminated.

Subsequently, an experimental result by the inventor will be described to show the present embodiment in more detail.

### (Comparison Example)

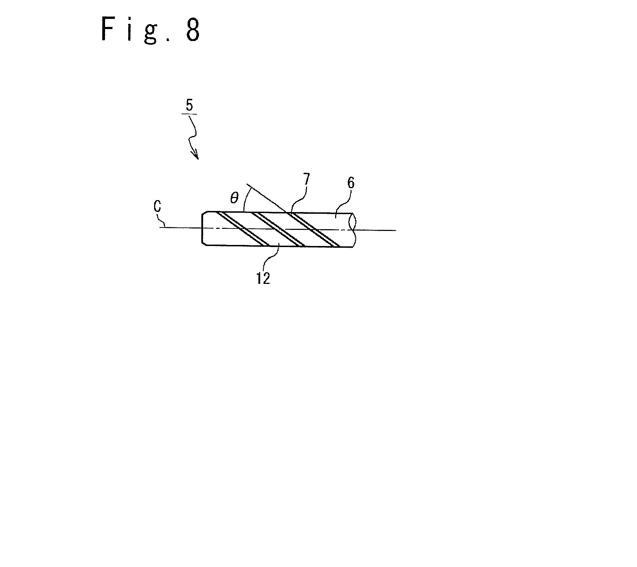

As a comparison example 1, a reamer in which the blade sections 7 extends while being twisted in an opposite direction was prepared. Also, a twist angle of the blade section was set to 30°. FIG. 8 is a diagram showing the definition of the twist angle. The twist angle is an angle between a line defined along the blade section (the tip portion of the blade section) and a straight line parallel to the central axis c of the reamer 5 which passes through one point on the line defined along the blade section. Also, in the reamer, a cutting fluid flow passage and outlets were formed such that the cutting fluid was discharged toward the tip portion. Also, an outer diameter of the reamer was set to 16 mm.

The reamer according to the comparison example 1 was rotated in the rotation speed of 200 rpm to process a hole formed in the metal plate of the work material. It should be noted that a flow quantity of the cutting fluid was set between 15 and 17 ml/min. Also, a feeding speed (a movement speed of the reamer) was set to 0.05 mm/rev. After the processing, the height of the burr generated in the metal plate was measured.

### (Example 1)

As an example 1, the reamer in which the blade sections 7 extended while being twisted in the forward direction was prepared. Also, the twist angle of the blade section was set to 10°. Also, in the reamer, the cutting fluid flow passage and the outlet group were formed such that the cutting fluid was discharged toward the back portion of the reamer. The other structures were made similar to those of the comparison example. The reamer according to the example 1 was used to process the hole formed in the work material under the same condition as in the comparison example. After the processing, the height of the burr generated on the metal plate was measured.

### (Example 2)

As an example 2, the reamer in which the twist angle of the blade section was 30° was prepared. The other structures were similar to those of the example 1. The reamer according to this example 2 was used to process the hole formed in the work material under the same condition as in the comparison example. After the processing, the height of the burr generated on the metal plate was measured.

### (Example 3)

As the example 3, the reamer in which the twist angle of the blade section was 45° was prepared. The other structures were similar to those of the example 1. The reamer according to this example 3 was used to process the hole formed in the work material under the same condition as in the comparison example. After the processing, the height of the burr generated on the metal plate was measured.

### (Experimental Result and consideration)

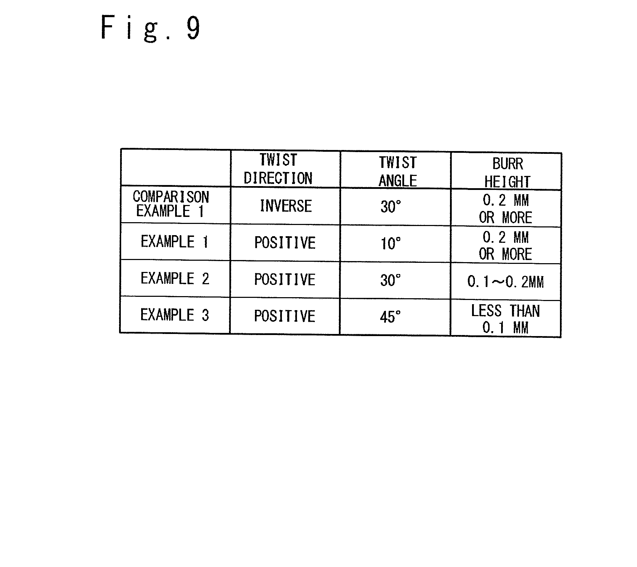

FIG. 9 is a table showing the experimental result. As shown in FIG. 9, in the comparison example 1, the height of the burr was 0.2 mm or more. In the example 1, the height of the burr was between 0.2 mm or more. In the example 2, the height of the burr was between 0.1 mm and 0.2 mm. In the example 3, the height of the burr was less than 0.1 mm.

When the comparison example 1 and the example 2 are compared, it could be understood that the example 2 is lower in the height of the burr. That is, it is confirmed that the twist direction of the blade section was set to the forward direction, and the cutting fluid was discharged to the back side, so that the generation of the burrs can be suppressed.

Also, when the examples 1 to 3 are compared, it could be understood that the height of the burrs are further suppressed as the twist angle becomes larger. Also, in the twist angle of 30° or less, the burr having the height of 0.2 mm or more was confirmed to be generated. However, when the composite material plate was included in the work material, and the twist angle exceeds 50°, there was a case that fuzz was generated in a portion of the composite material plate. Thus, from the viewpoint of suppressing the fuzz, the twist angle is preferred to be 50° or less. That is, the twist angle is preferred to be 30° or more from the viewpoint of suppressing the generation of the burr and preferred to be 50° or less from the viewpoint of suppressing the fuzz.

This application claims a priority on convention based on Japanese Patent Application No. JP 2010-252316 filed on November 11, 2010. The disclosure thereof is incorporated herein by reference.

## Claims

1. A reamer comprising:
a column section rotating around a central line in a predetermined rotation direction;
a blade section provided on an outer surface of said column section and extending while being twisted in a direction in which upper-cutting is performed;
a cut liquid flow passage provided inside said column section to introduce a cut liquid into said cut liquid flow passage; and
an outlet group formed on the outer surface of said column section and connected with said cut liquid flow passage,
wherein said cut liquid flow passage extends such that the cut liquid is discharged from said outlet group toward a back portion of said reamer.

2. The reamer according to claim 1, wherein said blade section extends to a tip portion of said reamer while being twisted to a rotation direction of said reamer.

3. The reamer according to claim 1 or 2, wherein said outlet group comprises a plurality of outlets,
wherein said cut liquid flow passage comprises:
a trunk portion extending along the central line of said column section; and
a plurality of branch portions, each of which is connected with said trunk portion and a corresponding one of said plurality of outlets, and
wherein each branch portion extends from said trunk portion toward said back portion.

4. The reamer according to any of claims 1 to 3, wherein a twist angle of said blade section is in a range of 30° to 50°.

5. A hole processing method comprising:
rotating a reamer; and
processing a hole formed previously in a work material, by using the rotating reamer,
wherein said reamer comprises:
a column section; and
a blade section provided on an outer surface of said column section and extending while being twisted,
wherein said rotating a reamer comprises:
rotating said reamer in a direction in which upper-cutting is performed, and
wherein said processing comprises:
introducing a cut liquid inside the column section; and
discharging the introduced cut liquid from the outer surface of said column section for the back portion of the reamer.

6. The hole processing method according to claim 5, wherein the work material board includes a metal plate.

7. The hole processing method according to claim 6, wherein the work material includes a first fiber reinforced plastic board, and
wherein said metal plate and said first fiber reinforced plastic board are laminated.

8. The hole processing method according to claim 7, wherein the work material further includes a second fiber reinforced plastic board, and
wherein said metal plate is put between said first fiber reinforced plastic board and said second fiber reinforced plastic board.

9. The hole processing method according to any of claims 5 to 8, wherein a twist corner of said blade section is in a range of 30° to 50°.
